# EUROPEAN PATENT APPLICATION

(11) **EP 1 788 428 A1**
(43) Date of publication of application: **23.05.2007**
(21) Application number: 05257574.3
(22) Date of filing: 08.12.2005
(51) Int. Cl.: G03B 19/16, G02B 13/00, H04N 7/14

(54) **Pinhole type imaging device**

(30) Priority: 22.11.2005 JP 2005337446
(71) Applicant: Techno International Co., Ltd., Tokyo 151-0053 (JP); Yosho Co., Ltd., Shibuya-ku Tokyo 151-0053 (JP)
(72) Inventor: Abe, Chiaki Techno International Co. Ltd., Tokyo 151-0053 (JP)
(74) Representative: Finnie, Peter John

(57) **Abstract**

A pinhole type imaging device of the present invention includes a pinhole type aperture stop which allows advancing of light ray into an optical system and imaging, and at least one lens which is attached to the pinhole type aperture stop. Accordingly, an imaging device where it is realized that all imaging results of subjects positioned at different photographing distances are sharp, which has a simple structure and can be reduced in size, and which is suitable for attachment or use in an information terminal such as a small-sized image pickup device, a portable phone (a cellular phone), or a mobile type computer, and an auxiliary device thereof.

## Description

### Field of the Invention

The present invention relates to an imaging device, and in particular to an imaging device having a pinhole type lens.

### Background to the Invention

Imaging based upon an optical lens system is currently adopted in many of ordinary image pick-up devices, where, only when photographing is performed at a fixed photographing distance, a sharp imaging result of an object positioned at the fixed photographing distance or near the same can be obtained.

According to a conventional art, however, there are the following problems.
(1) When a subject positioned at a fixed distance is photographed, there is a problem that a sharp image of an object which is not positioned at the fixed distance can not be obtained. When sharp images of all objects positioned at different photographing distances are tried to be obtained, assistance of a series of mechanical devices, for example, an auto-focusing device or a lens system with a manual focusing function is further required.
(2) Even if assistance of the mechanical devices is utilized, there is such a problem that a sharp image of an object at the fixed photographing distance is only obtained, and such a merit that imaging results of an object relatively close to the fixed photographing distance and an object relatively distant therefrom are sharp can not be obtained.
(3) Since an image device having an auto-focusing and manually focusing optical device structure is provided with an exclusive mechanical structure for auto-focusing function and manual focusing function, such as a step motor, a VCM actuator, a manual focusing slide rod, and the like, there is a such a problem that a structure thereof is complicated, a size thereof is large, and a manufacturing cost is increased. In recent years, especially, a demand for mounting an image pickup device on mobile type electronic equipment becomes popular. However, since the mobile type electronic equipment is limited by its volume, there is a further strong demand for small sizing and simplification of the imaging device.

Accordingly, an object of the present invention is to provide an imaging device where a degree of freedom or flexibility of a photographing distance of an object to be photographed is enhanced by adopting a non-auto-focusing and manual focusing optical mechanism, and it is realized that all of imaging results at different photographing distances of subjects are sharp and simultaneously therewith imaging with reduced optical distortion can be obtained at a high contrast characteristic.

Another object of the present invention is to provide an imaging device which has a simple structure and can be reduced in size, and which is suitable for attachment or use in an information or data processing terminal such as a small-sized image pickup device, a portable phone (a cellular phone), or a mobile type computer, and an auxiliary device thereof.

### Summary of the Invention

The present invention can be realized based upon the following principle. A pinhole is a great invention made by Mo-tzu in ancient times in China, and it still has a great influence even nowadays where techniques have been highly sophisticated due to its easy adaptability.

The present invention is a pinhole type imaging device designed based upon a pinhole imaging, and it includes the following members.

The pinhole type imaging device includes a pinhole type aperture stop which allows advancing of light ray into an optical system and imaging and whose hole diameter is in a range of 0.5mm to 0.9mm, a light shielding wall which blocks advancing of light ray other than the pinhole, at least one optical lens which is attached to the pinhole type aperture stop, and an optical lens fixing frame which extends from the light shielding wall.

The at least one optical lens is one lens, the one lens being attached to the opposite side of the pinhole type aperture stop from a subject in sequence.

The at least one optical lens is two lenses, the two lenses being sequentially attached to the opposite side of the pinhole type aperture stop from a subject.

The at least one optical lens is two lenses, one of the lenses being attached to the opposite side of the pinhole type aperture stop from a subject, while the other being attached to the side of the pinhole type aperture facing the subject.

An image from the imaging device having the pinhole type lens is converted to electronic image signals by a photoelectric converter (for example, a CCD image sensor or a CMOS image sensor).

Since the above structure is adopted in the present invention, the present invention has such a feature that, when light rays pass through the pinhole type aperture stop, both imaging of light rays which are advanced from a remote object into the optical system and imaging of light rays which are advanced from a close object into the optical system are sharp, and all images of subjects positioned at different distances are simultaneously made sharp. Simultaneously therewith, since such a defect that distortion is large in an ordinary pinhole can overcome by optical lenses attached at a front end and a rear end of the pinhole, it is possible to cause an entire photosensitive area of a sensor element to receive an image obtained by the imaging device of the present invention.

Since the present invention includes such an advantage that neither an auto-focusing system mechanism nor a manually focusing system mechanism is required, so that a structure is simple, a size is compact, a life in use is long, and a cost is reduced, the imaging device of the present invention is suitable for attachment and use in an information or data processing terminal such as such as a small-sized image pickup device, a portable phone (a cellular phone), or a mobile type computer, and an auxiliary device thereof.

### Brief Description of the Drawings

Examples of the present invention will now be described in detail with reference to the accompanying drawings, in which:
Fig. 1 is a structural view of a first example of a pinhole type imaging device according to the present invention.
Fig. 2 is a structural view of a second example of the pinhole type imaging device according to the present invention.
Fig. 3 is a structural view of a cellular phone provided with the pinhole-type imaging device of the present invention.
Fig. 4 is a structural view of a pinhole type imaging device portion of a cellular phone provided with the pinhole type imaging device of the present invention.
Fig. 5 is a schematic perspective view of an information processing terminal according to another embodiment of the present invention, where the pinhole-type imaging device of the present invention is applied to a notebook type personal computer.
Fig. 6 is a schematic perspective view of an information processing terminal according to another embodiment of the present invention, where the pinhole type imaging device of the present invention is applied to a mobile computer.

### Detailed Description

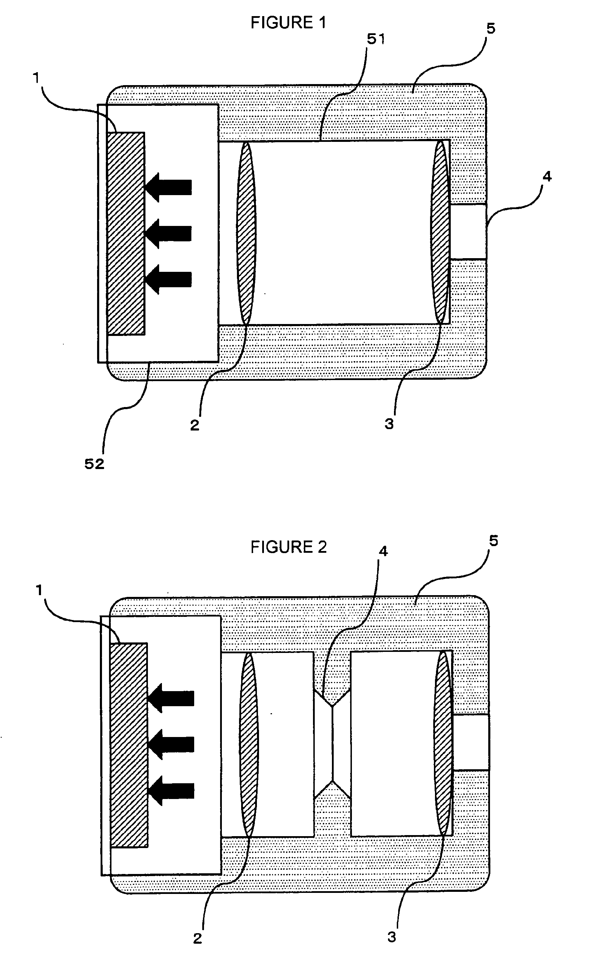

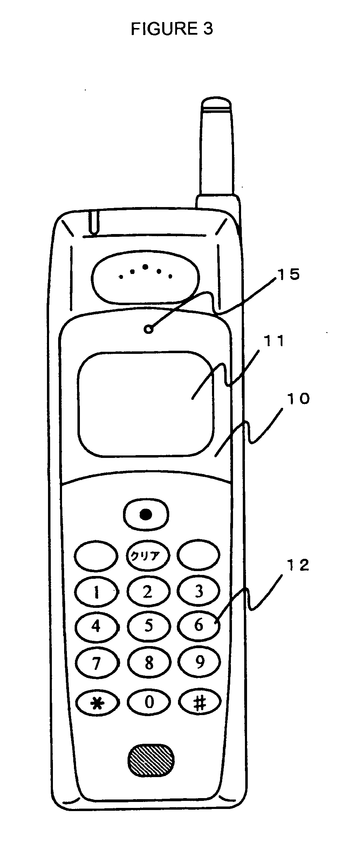

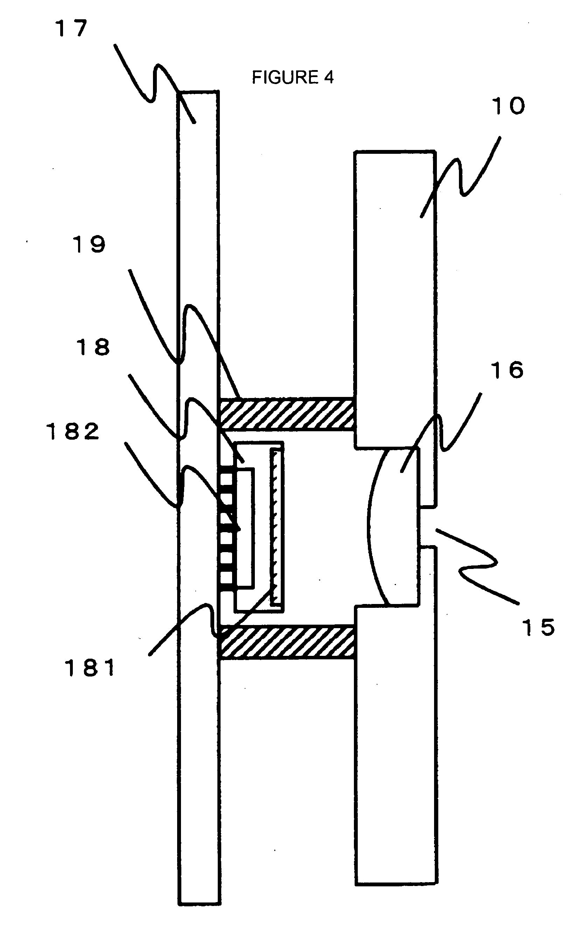

Fig. 1 is a structural view of a first example of a pinhole type imaging device according to the present invention, Fig. 2 is a structural view of a second example of the pinhole type imaging device according to the present invention, Fig. 3 is a structural view of a cellular phone provided with the pinhole-type imaging device of the present invention, and Fig. 4 is a structural view of a pinhole type imaging device portion of a cellular phone provided with the pinhole-type imaging device of the present invention.

In the present invention, the inventor conducted a series of experiments for pinhole diameter selection on the basis of theoretical analysis and research in order to obtain a diameter of a pinhole aperture stop which allows an optimal effect. The diameter was set to 0.5mm, 0.6mm, 0.7mm, 0.8mm, 0.9mm, and 1.0mm, a depth of the pinhole was set in a range of 1.0mm to 3.0mm, and indoor luminance was set to 100 luxes, so that brightness, distortion, sharpness of an image photographed through a corresponding pinhole were observed. The details of the experimental results are shown in the following Table 1.

**Table 1**

| Opening diameter of pinhole | brightness of image | image distortion | image sharpness |
|---|---|---|---|
| 0.5 mm | × | large | ⊚ |
| 0.6 mm | ○ | middle | ⊚ |
| 0.7 mm | ⊚ | small | ⊚ |
| 0.8 mm | ⊚ | small | ⊚ |
| 0.9 mm | ⊚ | small | ○ |
| 1.0 mm | ⊚ | small | Δ |

When the opening diameter of the pinhole was set to 0.7mm or less, the images obtained were sharp. However, the images included distortions and they were insufficient in brightness due to lack of a light amount. When the opening diameter of the pinhole was set to 0.9 or more, images obtained were indistinct. The indistinctness was caused by light scattering within the pinhole, because the opening diameter was excessively large. When the opening diameter of the pinhole was set at about 0.8mm, images obtained did not include distortion because of a sufficient light amount. According to the above analysis and experiments, it was found that the opening diameter of the pinhole in the present invention was in a range of 0.7 to 0.9mm, and an image obtained at the opening diameter of 0.8mm was optimal. Further explanation is made along examples.

### (Example 1)

Fig. 1 shows a pinhole type imaging device with two optical lenses, where a pinhole 4 with a diameter of 0.8mm is formed at a distal end of a main unit 5, and a depth of the pinhole 4 is set to 2mm. A rear end of the pinhole 4 is expanded to constitute a lens cylinder 51 with a large diameter. A rear end of the lens cylinder 51 is further expanded to constitute an accommodation space 52 with a large diameter for a photoelectric converting sensor 1. Optical lenses 3 and 2 are sequentially fitted into the lens cylinder 51 from a rear portion of the main unit 5 and the photoelectric converting sensor 1 is disposed in the accommodation space 52. The main unit 5 is integrally formed from opaque material and it constitutes a light shielding wall for preventing light rays from advancing from a portion of the main unit 5 other than the pinhole.

When the pinhole type imaging device of Example 1 is used, light rays from a subject within a visible range (an object to be photographed and a background) are incident on the optical lens 3 through the pinhole 4 and they are converged by the optical lenses 3 and 2, so that the subject is imaged on the photoelectric converting sensor 1. Since the diameter size of the pinhole unit is set at 0.8mm, sharp images of an object positioned at a distance very close to the imaging device and an object positioned at a position much distant from the imaging device can be simultaneously formed on the photoelectric converting sensor 1. Therefore, such a problem that a sharp imaging of an object except for an object positioned at a fixed distance can not be achieved in other conventional imaging devices can be solved.

### (Example 2)

Fig. 2 shows another Example of the pinhole type imaging device according to the present invention, and it is different from the Example 1 in that two optical lenses 2 and 3 are provided at front and rear ends of the pinhole 4 in the former. The optical lens 2 is fitted at a distal end of the main unit 5, and a pinhole 4 with a diameter of 0.75mm is formed concentrically with the optical lens 2 behind the optical lens 2, where a depth of the pinhole 4 is set to 3mm. A rear end of the pinhole 4 is expanded to constitute a lens cylinder 51, and a rear end of the lens cylinder 51 is further expanded to constitute an accommodation space 52 with a large diameter for a photoelectric converting sensor 1. The optical lens 3 is fitted into the lens cylinder 51 from a rear portion of the main unit 5, and the photoelectric converting sensor 1 is disposed in the accommodating space 52. The main unit 5 is integrally formed from opaque material and it constitutes a light shielding wall for preventing light rays from advancing from a portion of the main unit 5 other than the pinhole.

### (Example 3)

Fig. 3 and Fig. 4 shows an Example of a cellular phone applied with the pinhole type imaging device of the present invention.

The cellular phone has a casing 10 whose front face is provided with a display unit 11, an operation unit 12, and a pinhole unit 15.

The pinhole unit 15 is formed at an upper end with a pinhole 19 with a diameter of 0.8mm, and a convex lens 16 is fittingly provided on the opposite face of the pinhole type aperture stop from a subject side. An accommodation space for a CCD image sensor 18 is defined at a lower portion of the pinhole unit 15, a filter glass 181 and a sensor unit 182 are included in the CCD image sensor 18, and the sensor unit 182 is fixed to a main base plate 17, and the filter glass 181 is disposed above the sensor unit 182.

A storage unit or a chip of the cellular phone which stores image data produced from image signals obtained by an image photographed by a corresponding CCD image sensor 18 or a signal processing circuit which converts the image data for performing display on the display unit 11 is provided on the main base plate 17 of the cellular phone.

In order to utilize a whole area of the sensor unit 182 effectively, a convex lens 16 having an aspheric surface on its one side is fitted behind the pinhole unit 15, so that light rays are converged. The convex lens 16 can be made from plastic material or hard glass material.

A glass cover whose color changes according to a light amount is used for the glass portion or the filter glass 181 provided in the CCD image sensor 18. When an ordinary glass is used for the glass portion, a baking phenomenon (foxing) occurs due to incident light from the convex lens 16 so that image quality not only deteriorates but also a life of the CCD image sensor 18 in use becomes short. Therefore, the glass cover is used in the cellular phone in order to prevent such a phenomenon from occurring.

Visible lights (an object to be photographed and a background) taken in via the pinhole unit 15 of the cellular phone are incident on the convex lens 16, and they are incident on the sensor unit 182 from the convex lens 16 via the glass portion 181 of the CCD image sensor 18 provided on the main base plate 17 of the cellular phone under non-focused state. An image can be immediately displayed on the display unit 11 through the signal processing circuit sharply, or it may be stored in a chip of the cellular phone.

Since the pinhole unit 15 has the pinhole aperture stop with a diameter of 0.8mm, sharp images of an object positioned at a distance very close to the cellular phone and an object positioned at a position much distant from the cellular phone can be simultaneously formed on the sensor 18, so that the images can be clearly displayed on the display unit 11.

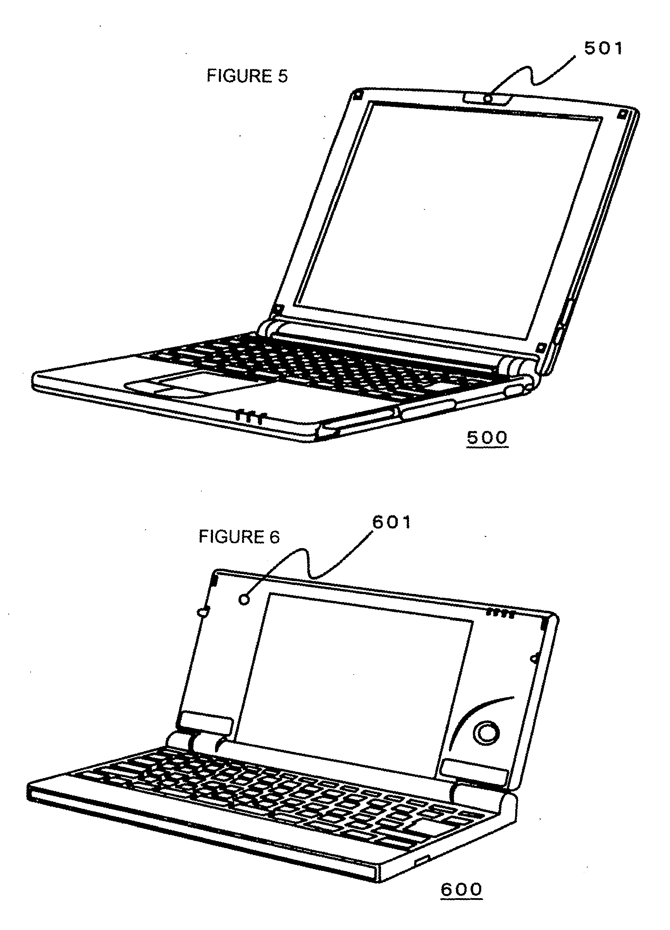

Fig. 5 and Fig. 6 are schematic perspective views of information processing terminals according to other embodiments of the present invention, Fig. 5 showing a notebook type personal computer and Fig. 6 showing a mobile computer, respectively. Incidentally, since basis constitutions in casings according these embodiments are the same as that in the above-described embodiment, explanation thereof will be omitted.

In a notebook type personal computer 500 shown in Fig. 5, a pinhole portion 501 is provided above an upper portion of a liquid crystal display. In a mobile computer 600 shown in Fig. 6, a pinhole portion 601 is provided at a left side of the liquid crystal display. A position where each of the pinhole portions is to be provided is not limited to one of the positions illustrated necessarily.

According to the other embodiments, an image photographed via the pinhole portion is a sharp image which has a sufficient brightness and does not include distortion regardless of a distance to a subject, and a flexibility of a casing design can be significantly increased, because an arrangement position of the pinhole portion can be set arbitrarily at a design stage.

Thus, since both imaging of light rays advanced to the optical system from a distant object and imaging of light rays advanced to the optical system from a close object are sharp when the light rays pass through the pinhole type aperture stop, such a feature that all images of subjects positioned at different distances can be simultaneously made sharp. Simultaneously therewith, since such a drawback that large distortion occurs at an ordinary pinhole can be overcome by the optical lenses disposed at the front and rear ends of the pinhole, it is possible to cause an entire photosensitive area of a sensor element to receive an image obtained by the imaging device of the present invention.

## Claims

1. A pinhole type imaging device comprising: a pinhole type aperture stop which allows advancing of light ray into an optical system and imaging and whose hole diameter is in a range of 0.5mm to 0.9mm; a light shielding wall that blocks advancing of light ray other than the pinhole; at least one optical lens which is attached to the pinhole type aperture stop; and a optical lens fixing frame which extends from the light shielding wall.

2. The pinhole type imaging device according to claim 1, wherein the at least one optical lens is one lens and the one lens is attached to the opposite side of the pinhole type aperture stop from a subject in sequence.

3. The pinhole type imaging device according to claim 1, wherein the at least one optical lens is two lenses, and the two lenses are sequentially attached to the opposite side of the pinhole type aperture stop from of a subject.

4. The pinhole type imaging device according to claim 1, wherein the at least one optical lens is two lenses, and one of the lenses is attached to the opposite side of the pinhole type aperture stop from a subject, while the other is attached to the side of the pinhole type aperture facing the subject.

5. A pinhole type lens system where a pinhole type imaging device is provided at a portion of a casing, the imaging device comprising: a pinhole type aperture stop which allows advancing of light ray into an optical system and imaging and whose hole diameter is in a range of 0.5mm to 0.9mm; a light shielding wall that blocks advancing of light ray other than the pinhole; at least one optical lens which is attached to the pinhole type aperture stop; and a optical lens fixing frame which extends from the light shielding wall.

6. The pinhole type lens system according to claim 5, further comprising a photoelectric converting sensor, wherein the photoelectric converting sensor can be a CCD image sensor or a CMOS image sensor.

7. The pinhole type lens system according to claim 6, further comprising a switching device for switching an image taking-in speed of the photoelectric converting sensor, wherein the photoelectric converting sensor can be a CCD image sensor or a CMOS image sensor.

8. The pinhole type lens system according to claim 6 or 7, wherein the at least one optical lenses are two optical lenses, and the two lenses are disposed between the pinhole type aperture stop and an photoelectric device and the two lenses are fixed to a lens frame structure, or one of the two lenses is disposed between the pinhole type aperture stop and the photoelectric device and the other thereof is disposed at a distal end of the pinhole type aperture hole in a direction of a subject, and the two lenses are fixed to the lens frame structure.

9. The pinhole type lens system according to claim 6 or 7, wherein the at least one optical lens is one optical lens and the one optical lens is disposed between the pinhole type aperture stop and a photoelectric device.

10. The pinhole type lens system according to claim 6 or 7, which is applied to an information processing terminal such as a small-sized image pickup device, a portable phone, or a mobile computer, or an auxiliary device thereof.
